# EUROPÄISCHE PATENTSCHRIFT

(11) **EP 0 553 104 B1**
(45) Veröffentlichungstag und Bekanntmachung des Hinweises auf die Patenterteilung: **08.03.1995**
(21) Anmeldenummer: 91915159.7
(22) Anmeldetag: 23.08.1991
(51) Int. Cl.: F16D 55/226, F16D 65/16, F16D 65/56

(54) **SCHEIBENBREMSE FÜR FAHRZEUGE, INSBESONDERE STRASSENFAHRZEUGE**
DISC BRAKE FOR VEHICLES, ESPECIALLY ROAD VEHICLES
FREIN A DISQUE POUR VEHICULES, EN PARTICULIER POUR VEHICULES ROUTIERS

(30) Priorität: 17.10.1990 DE 4032886
(43) Veröffentlichungstag der Anmeldung: 04.08.1993
(73) Patentinhaber: KNORR-BREMSE Systeme für Nutzfahrzeuge GmbH, 80809 München (DE)
(72) Erfinder: BAUMGARTNER, Hans, D-8052 Moosburg (DE); IRASCHKO, Johann, D-8069 Schweitenkirchen (DE); SCHULLERUS, Otto, D-8000 München 90 (DE); TRIMPE, Robert, D-8000 München 50 (DE)
(74) Vertreter: KUHNEN, WACKER & PARTNER
(86) Internationale Anmeldenummer: DE9100687
(87) Internationale Veröffentlichungsnummer: WO9207201

(56) Entgegenhaltungen:
- DE-A- 1 951 312
- DE-A- 2 507 012
- DE-A- 3 716 202
- FR-A- 2 249 264

## Beschreibung

Die vorliegende Erfindung bezieht sich auf eine Scheibenbremse für Fahrzeuge gemäß dem Oberbegriff des Anspruchs 1, die insbesondere, jedoch nicht ausschließlich, für Straßenfahrzeuge vorgesehen ist.

Eine Scheibenbremse dieser Art ist aus der DE-A-37 16 202 bekannt. Bei dieser bekannten Scheibenbremse wird eine Bremsscheibe von einem Bremssattel umfaßt, auf dessen einer Seite eine druckluftbetätigte Zuspannvorrichtung angeordnet ist, die eine Betätigungsvorrichtung in Form eines Drehhebels aufweist, der bei Druckbeaufschlagung eine sich parallel zur Drehachse der Bremsscheibe erstreckende und verschiebbar gelagerte Traverse zur Bremsscheibe hin verschiebt. In der Traverse sind zwei Gewindehülsen bzw. Stellspindeln verschraubt, die an ihrem bremsscheibenzugewandten Ende jeweils ein Druckstück aufweisen, über die sie auf eine Bremsbacke einwirken, die verschiebbar im Bremssattel gelagert ist. Bei Druckluftbeaufschlagung wird der auf die Traverse ausgeübte Druck demzufolge über die Druckstücke auf die Bremsbacke übertragen, so daß sie die ihr zugewandte Seitenfläche der Bremsscheibe berührt, worauf schließlich infolge der hierdurch hervorgerufenen Verschiebung des Bremssattels auch die gegenüberliegende Bremsbacke gegen die Bremsscheibe gedrückt wird.

Zur selbsttätigen Spielnachstellung bzw. zum Konstanthalten des Lüftspiels der Scheibenbremse ist bei dieser bekannten Zuspannvorrichtung ein bremsbetätigungshubabhängig angetriebener Drehantrieb vorgesehen, der über eine Axialverzahnung axial verschiebbar, aber drehfest mit den beiden Gewindehülsen gekoppelt ist. Der Drehantrieb dieser bekannten Zuspannvorrichtung wird hierbei von einem Zahnriemen gebildet, der in die am Außenumfang der Gewindehülsen vorgesehene Axialverzahnung eingreift und auf diese Weise beide Gewindehülsen drehfest miteinander koppelt. Der Zahnriemen bildet demzufolge eine Synchronisiereinrichtung zum synchronen Antrieb beider Gewindehülsen. Die zur Nachstellung erforderliche Drehbewegung wird von einer Druckfeder erzeugt, die vom Drehhebel bei jedem Bremsvorgang klinkenartig in eine Seitenverzahnung des Zahnriemens eingreift.

Die wesentlichen Funktionsteile der vorstehend erläuterten Nachstelleinrichtung der bekannten Zuspannvorrichtung befinden sich demzufolge im Inneren des Bremssattels und sind aufgrund des gewählten Antriebsprinzips relativ schwer zugänglich, so daß ein Austausch oder eine Wartung der Nachstelleinrichtung erst nach Demontage wesentlicher Teile des Bremssattels möglich ist. Auch die beim Einbau von neuen Bremsbacken erforderliche Justierung der Nachstelleinrichtung ist hierdurch wesentlich erschwert. Schließlich besteht bei jeglicher Wartungsarbeit dieser Art die Gefahr, daß die die Traverse vorspannende Feder beim Öffnen des Gehäuses der Zuspannvorrichtung einen so starken Druck ausübt, daß durch zu plötzliches Öffnen Verletzungen nicht ausgeschlossen werden können.

Der Erfindung liegt demzufolge die Aufgabe zugrunde, eine Scheibenbremse gemäß dem Oberbegriff des Anspruchs 1 derart weiterzubilden, daß jegliche Wartungsarbeiten an der Nachstelleinrichtung mit geringstmöglichem Aufwand und gefahrlos durchführbar sind.

Diese Aufgabe wird erfindungsgemäß mit den im Kennzeichnungsteil des Anspruchs 1 angegebenen Maßnahmen gelöst.

Durch diese Maßnahmen wird erreicht, daß beispielsweise der Montagevorgang der Nachstelleinrichtung auf äußerst einfache und zeitsparende Weise wie folgt vorgenommen werden kann: Die beiden Drehantriebe werden über die bremsscheibenabgewandten Öffnungen des Bremssattels in die Gewindehülsen eingeführt, worauf jedes Hebelteil mit dem betreffenden Mitnehmerteil gekoppelt werden kann; daraufhin kann die Synchronisiereinrichtung mit beiden Drehantrieben gekoppelt und schließlich mittels des anflanschbaren Deckelteils abgedeckt werden. Die Demontage der Nachstelleinrichtung gestaltet sich auf ebenso einfache Weise in umgekehrter Reihenfolge. Durch den erfindungsgemäßen Aufbau der Nachstelleinrichtung wird darüberhinaus erreicht, daß die beim Bremsbackenwechsel erforderliche Justage sehr schnell durchgeführt werden kann. Schließlich wird auch gewährleistet, daß sich die Feder der Traverse nicht entspannen kann, so daß jegliche Gefährdung des Wartungspersonals ausgeschlossen werden kann.

Vorteilhafte Weiterbildungend der Erfindung sind Gegenstand der Unteransprüche.

In der Zeichnung ist ein Ausführungsbeispiel für eine nach der Erfindung ausgebildete Scheibenbremse dargestellt, und zwar zeigt
- Fig.1: einen Axialschnitt durch einen Bremssattel,
- Fig.2: eine relativ zu Fig.1 etwas verkleinerte Aufsicht auf einen teilweise aufgeschnittenen Bremssattel,
- Fig.3: einen vergrößerten Ausschnitt aus Fig.2 und
- Fig.4: eine Ansicht des Bremssattels bei abgenommenem Bremszylinder in Pfeilrichtung X in Fig.2.

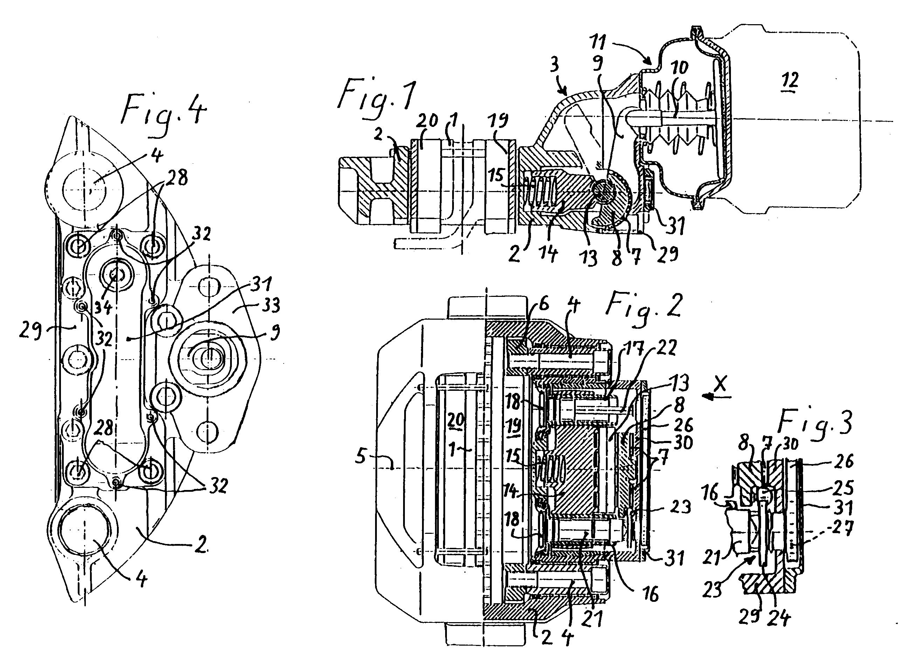

Gemäß Fig.1 und 2 weist die Scheibenbremse einen eine Bremsscheibe 1 übergreifenden Bremssattel 2 auf, der einseitig eine Zuspannvorrichtung 3 trägt. Vermittels einer Bolzenanordnung 4 ist der Bremssattel 2 parallel zur Achse 5 der Bremsscheibe 1 verschieblich an einem festen Bremsträger 6 gelagert. Die Zuspannvorrichtung 3 weist einen in Entfernungsrichtung von der Bremsscheibe 1 vermittels eines Halbschalenlagers 7 mittel- oder unmittelbar und drehbar gegen den Bremssattel 2 abgestützten Drehhebel 8 auf, an dessen radial auskragenden Hebelarm 9 die Kolbenstange 10 eines Bremszylinders 11 mit gegebenenfalls Federspeicherteil 12 angreift. Der Drehhebel 8 ist vermittels eines zu seiner Drehachse exzentrisch angeordneten, als Drehlager 13 ausgebildeten Exzenters längsmittig mit einer Traverse 14 gekoppelt, welche im wesentlichen in Richtung der Achse 5 verschieblich und aus dieser Richtung in der Zeichenebene der Fig.1 geringfügig auslenkbar im Bremssattel 2 gelagert ist. Eine zwischen dem Bremssattel 2 und der Traverse 14 eingespannte Druckfeder 15 belastet die Traverse 14 in Richtung zum Drehhebel 8. Die beiden Enden der Traverse 14 sind justierbar mit je einer Gewindehülse 16 bzw. 17 verschraubt, deren Achsen parallel zur Achse 5 verlaufen und welche bremsscheibenseitig mit je einem Druckstück 18 enden, welche eine Bremsbacke 19 gegen die Bremsscheibe 1 anzudrücken vermögen; die Bremsbacke 19 ist in Richtung der Achse 5 verschieblich im Bremssattel 2 gelagert und in Umfangsrichtung der Bremsscheibe 1 gegen den Bremssattel 2 oder den Bremsträger 6 abgestützt. Zur anderen Seite der Bremsscheibe 1 ist eine Bremsbacke 20 am Bremssattel 2 gehaltert. In die Gewindehülsen 16 und 17 greift jeweils ein Drehantrieb 21 bzw. 22 ein, die beiden Drehantriebe 21 und 22 überragen bremsscheibenabgewandt die Gewindehülsen 16 und 17. Die Drehantriebe 21 und 22 sind jeweils vermittels einer Axialverzahnung, welche aus als axiale Abflachung ausgebildet sein kann, drehfest, jedoch axialverschieblich mit der sie aufnehmenden Gewindehülse 16 bzw. 17 gekoppelt. Der eine Drehantrieb 21 ist außerhalb der Gewindehülse 16 mit einer Drehbetätigung 23 versehen, welche genauer aus Fig.3 ersichtlich ist. Zur Bildung der Drehbetätigung 23 ist der Drehantrieb 21 mit einem Mitnehmerteil 24 versehen, welches gabelförmig einen kugelkopfartigen Hebelteil 25 umgreift, der seinerseits am Drehhebel 8 befestigt ist. Drehbewegungen des Drehhebels 8 um das Halbschalenlager 7 werden somit in Drehbewegungen für den Drehantrieb 21 umgesetzt. Bremsscheibenabgewandt enden beide Drehantriebe 21 und 22 mit je einem Zahnrad, die Zahnräder sind in Fig.2 und 3 nur angedeutet, sie sind durch einen sie relativ unverdrehbar miteinander verbindenden Zahnriemen 26 abgedeckt. In Fig.3 ist für den Drehantrieb 21 das Zahnrad im Bereich 27 vom Zahnriemen 26 umschlungen.

Die Drehantriebe 21 und 22 können beliebiger Bauart sein, sie können beispielsweise so aufgebaut sein, wie dies in den nicht vorveröffentlichten DE-OSen 4018227 und 4020485 beschrieben ist; sie dienen der Spielnachstellung der Scheibenbremse bei Verschleiß der Bremsbacken 19,20.

Zuspannseitig endet der Bremssattel 2 bremsscheibenabgewandt etwa nahe des bremsscheibenabgewandten Endes der Traverse 14, er ist in Richtung der Achse 5 offen und endet mit einem Flanschrand, an welchem vermittels aus Fig.4 ersichtlicher Schrauben 28 ein wannenartiger Einzeldeckel 29 mit seinem Wannenrand angeflanscht ist. Der Boden 30 des Einzeldeckels 29 bildet ein bremsscheibenabgewandtes Widerlager für das Halbschalenlager 7 und er weist Durchbrechungen auf, in welchen die beiden Drehantriebe 21 und 22 gelagert sind. Die Drehbetätigung 23 befindet sich bremsscheibenzugewandt dicht vor dem Boden 30. Die Drehantriebe 21 und 22 durchgreifen den Boden 30 und tragen bremsscheibenabgewandt unmittelbar vor diesen ihre Zahnräder, so daß der Zahnriemen 26 dicht vor dem Boden 30 verläuft. Bodenseitig ist mit dem Einzeldeckel 29 ein weiterer, wannenartiger Einzeldeckel 31 vermittels Schrauben 32 flanschartig verschraubt, welcher die Zahnräder mitsamt dem Zahnriemen 26 abdeckt.

Der gegebenenfalls das Federspeicherteil 12 tragende Bremszylinder 11 ist an dem aus Fig.4 ersichtlichen Flansch 33 anflanschbar, der sich gemäß Fig.1 am Einzeldeckel 29 befindet, welcher aber auch am Bremssattel 2 selbst angeordnet sein kann.

Je nach erforderlicher Montage- bzw. Wartungsarbeit ist vermittels der Schrauben 32 der Einzeldeckel 31 und vermittels der Schrauben 28 der Einzeldeckel 29, gegebenenfalls mitsamt dem Einzeldeckel 31, demontierbar bzw. montierbar. Bei abgenommenem Einzeldeckel 31 ist die Synchronisiereinrichtung mit den Zahnrädern der Drehantriebe 21 und 22 sowie deren als Koppelungsglied dienender Zahnriemen 26 bzw. sind die an dessen Stelle vorgesehenen, weiteren Zahnräder zugänglich, es kann eine Rückstellung der Drehantriebe 21 und 22 beim Tausch verschlissener gegen neue Bremsbacken 19,20 und/oder ein Justieren der Synchronisiereinrichtung oder deren Wartung, gegebenenfalls mit Tausch von Einzelteilen, erfolgen. Werden, ausgehend vom dargestellten, montierten Zustand, die Schrauben 28 gelöst, so ist der Einzeldeckel 19 mitsamt dem Einzeldeckel 31 abnehmbar, wobei durch die bremsscheibenabgewandte Öffnung des Bremssattels 2 die Drehantriebe 21 und 22 aus den Gewindehülsen 16 und 17 herausziehbar sind und frei zugänglich werden. Die Drehantriebe 21 und 22 mitsamt der Synchronisiereinrichtung und dem Mitnehmerteil 24 bilden dabei eine Baueinheit. Nach Entfernen des Einzeldeckels 29 können auch das Halbschalenlager 7, der Drehhebel 8, das Drehlager 13 und gegebenenfalls die Traverse 14 demontiert werden. Bei Wiedermontage der vorerwähnten Baueinheit ist darauf zu achten, daß das Mitnehmerteil 24 in richtige Koppelung zum Hebelteil 25 gelangt.

Durch diese Demontage- und Montagemöglichkeit der Einzeldeckel 29 und/oder 31 sind die Montage- und Wartungsarbeiten für die Scheibenbremse in einfacher und zeitsparender Weise möglich.

In Abänderung zu vorstehend beschriebenem Ausführungsbeispiel kann einer der Drehantriebe 21 oder 22 bremsscheibenabgewandt einen Fortsatz aufweisen, welcher gegen Verschmutzungen abgedichtet den Einzeldeckel 31 durchgreift und mit Schlüsselflächen endet, wie es in Fig.4 mit dem Vierkantkopf 34 dargestellt ist. Durch Drehen dieses Vierkantkopfes 34 vermittels eines geeigneten Drehwerkzeuges sind die Drehantriebe 21 und 22 vermittels der Synchronisiereinrichtung gemeinsam rückstellbar, so daß beim Tausch verschlissener gegen neue Bremsbacken 19,20 auch der Einzeldeckel 31 an der Scheibenbremse verbleiben kann.

In weiterer Abänderung ist es selbstverständlich auch möglich, die Deckelanordnung andersartig als vorstehend beschrieben zu unterteilen, beispielsweise kann nur ein Deckelteil zum Abdecken sowohl der Drehantriebe 21,22 wie der Synchronisiereinrichtung vorgesehen werden, derart, daß nach Abnehmen dieses Deckelteils die Synchronisiereinrichtung zugänglich und demontierbar und sodann die Drehantriebe 21,22 aus den Gewindehülsen 16,17 herausziehbar sind; eine Zusammenfassung dieser Teile zu einer Baueinheit entfällt hierbei.

## Patentansprüche

1. Scheibenbremse für Fahrzeuge, insbesondere für Straßenfahrzeuge, mit einem eine Bremsscheibe (1) umfassenden Bremssattel (2), auf dessen einer Seite eine Zuspannvorrichtung (3) angeordnet ist, die eine Betätigungsvorrichtung (9,11) aufweist, welche eine sich parallel zur Drehachse (5) der Bremsscheibe (1) erstreckende, verschiebbar gelagerte Traverse (14) bei Druckbeaufschlagung zur Bremsscheibe (1) hin verschiebt, wobei in der Traverse (14) zwei Gewindehülsen (16,17) verschraubt sind, die an ihrem bremsscheibenzugewandten Ende mittels eines Druckstücks (18) auf eine im Bremssattel (2) verschiebbar gelagerte Bremsbacke (19) einwirken und die zur selbsttätigen Spielnachstellung bremsscheibenabgewandt einen über eine Axialverzahnung axialverschiebbar, aber drehfest gekoppelten, bremsbetätigungshubabhängig angetriebenen Drehantrieb (21,22) aufweisen, der mit dem Drehantrieb der anderen Gewindehülse über eine Synchronisiereinrichtung (26) drehfest gekoppelt ist, dadurch gekennzeichnet,
**[a]** daß die Drehantriebe (21,22) im Inneren der Gewindehülsen (16,17) angeordnet sind und an ihrem bremsscheibenabgewandten Ende mit der ein separates Bauteil bildenden Synchronisiereinrichtung (26) gekoppelt sind,
**[b]** daß die Betätigung der Drehantriebe (21,22) durch ein an wenigstens einem der Drehantriebe vorgesehenes Mitnehmerteil (24) erfolgt,
**[c]** daß der Bremssattel (2) bremsscheibenabgewandt Öffnungen aufweist, über die die Drehantriebe (21,22) in die Gewindehülsen (16,17) einführbar sind und über die sich wenigstens ein Hebelteil (25) mit dem betreffenden Mitnehmerteil (24) koppeln läßt, und
**[d]** daß sich die Synchronisiereinrichtung (26) bei eingeführten Drehantrieben (21,22) vor der bremsscheibenabgewandten Stirnseite des Bremssattels (2) befindet und mittels eines dort anflanschbaren Deckelteils (31) abdeckbar ist.

2. Scheibenbremse nach Anspruch 1, dadurch gekennzeichnet, daß am bremsscheibenabgewandten Ende der Drehantriebe (21,22) ein Zahnrad sitzt, das mit der als Koppelglied ausgebildeten Synchronisiereinrichtung (26) in Eingriff steht.

3. Scheibenbremse nach Anspruch 2, dadurch gekennzeichnet, daß die beiden Drehantriebe (21,22), die beiden Zahnräder, das Koppelglied (26) und das wenigstens eine Mitnehmerteil (24) zu einer Baueinheit zusammengefaßt sind, die ein flanschartiges, sich in Richtung des Koppelglieds (26) erstreckendes und dieses sowie die Zahnräder aufnehmendes Deckelteil (29,31) umfaßt, aus dem rechtwinklig die außenseitig Axialverzahnungen tragenden Drehantriebe (21,22) auskragen, wobei diese Baueinheit von der bremsscheibenabgewandten Seite her durch Einführen der Drehantriebe (21,22) in die Gewindehülsen (16,17) und nachfolgendes Anflanschen des Deckelteils (29,31) am Bremssattel (2) montierbar ist.

4. Scheibenbremse nach einem der Ansprüche 1 bis 3, dadurch gekennzeichnet, daß das Deckelteil aus mehreren, miteinander verbindbaren Einzeldeckeln (29,31) besteht.

5. Scheibenbremse nach Anspruch 4, dadurch gekennzeichnet, daß die beiden Drehantriebe (21,22) an einem direkt an den Bremssattel (2) anflanschbaren Einzeldeckel (29) gelagert sind, der eine Drehlagerung (7) für die Betätigungsvorrichtung (9,22) abstützt, wobei sich die beiden Zahnräder und das Koppelglied (26) auf der bremsscheibenabgewandten Seite dieses Einzeldeckels (29) befinden und mittels eines an diesen anflanschbaren weiteren Einzeldeckels (31) abdeckbar sind.

6. Scheibenbremse nach Anspruch 5, dadurch gekennzeichnet, daß die Drehlagerung ein Halbschalenlager (7) ist.

7. Scheibenbremse nach einem der Ansprüche 2 bis 6, dadurch gekennzeichnet, daß als Koppelglied ein Zahnriemen (26) vorgesehen ist.

## Claims

1. Disc brake for vehicles, in particular for road vehicles, having a brake calliper (2) embracing a brake disc (1), a clamping device (3) being arranged on one side of the brake calliper (2), which clamping device (3) has an actuating device (9, 11) which, when acted upon by pressure, displaces towards the brake disc (1) a cross-piece (14) that extends parallel with the axis of rotation (5) of the brake disc (1) and is supported for displacement, wherein two threaded sleeves (16, 17) are screwed on in the cross-piece (14), which threaded sleeves, at their end that faces towards the brake disc, act by means of a thrust piece (18) upon a brake block (19) supported for displacement in the brake calliper (2), and which, for automatic adjustment of play, facing away from the brake disc, have a rotary drive (21, 22) which is coupled for axial displacement although in a rotationally fixed manner by way of an axial gear-tooth system and which is driven in dependence upon the range of application of the brake and which is coupled in a rotationally fixed manner to the rotary drive of the other threaded sleeve by way of a synchronising device (26),
characterised in that
[a] the rotary drives (21, 22) are arranged inside the threaded sleeves (16, 17) and are coupled at their end that faces away from the brake disc to the synchronising device (26), which forms a separate component,
[b] actuation of the rotary drives (21, 22) takes place by means of a driver part (24) provided on at least one of the rotary drives,
[c] the brake calliper (2) has, facing away from the brake disc, openings by way of which the rotary drives (21, 22) can be inserted in the threaded sleeves (16, 17) and by way of which at least one lever part (25) can be coupled to the relevant driver part (24), and
[d] when the rotary drives (21, 22) are inserted, the synchronising device (26) is located in front of the end of the brake calliper (2) that faces away from the brake disc, and can be covered by a cover part (31) which can be flange-mounted there.

2. Disc brake according to claim 1, characterised in that, on the end of the rotary drives (21, 22) that faces away from the brake disc, there is seated a gearwheel which is engaged with the synchronising device (26), which is formed as a coupling member.

3. Disc brake according to claim 2, characterised in that the two rotary drives (21, 22), the two gearwheels, the coupling member (26) and the driver part (24), of which there is at least one, are combined to form a constructional unit which includes a flangetype cover part (29, 31) extending in the direction of the coupling member (26) and accommodating the latter as well as the gearwheels, from which cover part there project at right angles the rotary drives (21, 22) carrying axial gear-tooth systems on the outside, whereby this constructional unit can be mounted from the side facing away from the brake disc by inserting the rotary drives (21, 22) into the threaded sleeves (16, 17) and subsequently flange-mounting the cover part (29, 31) on the brake calliper (2).

4. Disc brake according to one of claims 1 to 3, characterised in that the cover part comprises several individual covers (29, 31) which can be connected together.

5. Disc brake according to claim 4, characterised in that the two rotary drives (21, 22) are supported on an individual cover (29) which can be flange-mounted directly on to the brake calliper (2) and which supports a pivot bearing arrangement (7) for the actuating device (9, 22), wherein the two gearwheels and the coupling member (26) are located on the side of this individual cover (29) that faces away from the brake disc, and can be covered by means of a further individual cover (31) which can be flange-mounted on to the first individual cover (29).

6. Disc brake according to claim 5, characterised in that the pivot bearing arrangement is a shell bearing (7).

7. Disc brake according to one of claims 2 to 6, characterised in that a toothed belt (26) is provided as the coupling member.

## Revendications

1. Frein à disque pour véhicules, notamment pour véhicules routiers, comportant un étrier de frein (2) qui entoure un frein à disque (1) et sur un côté duquel est agencé un dispositif de serrage (3), qui possède un dispositif d'actionnement (9,11), qui déplace une traverse (14) qui est montée de manière à être déplaçable et s'étend parallèlement à l'axe de rotation (5) du frein à disque (1), en direction de ce dernier lors d'une charge en pression, et dans lequel, dans la traverse (14), sont vissées deux douilles filetées (16,17), qui, au niveau de leur extrémité tournée vers le frein à disque, agissent, au moyen d'un élément de pression (18), sur une mâchoire de frein (19) montée de manière à être déplaçable dans l'étrier de frein (2), et qui, pour le rattrapage automatique du jeu, possèdent, sur le côté tourné à l'opposé du frein à disque, un dispositif d'entraînement en rotation (21,22), qui est déplaçable axialement par l'intermédiaire d'une denture axiale, mais est accouplé avec blocage en rotation et est entraîné en fonction de la course d'actionnement du frein et qui est accouplé avec blocage en rotation au dispositif d'entraînement en rotation de l'autre douille filetée, par l'intermédiaire d'un dispositif de synchronisation (26),
caractérisé en ce
[a] que les dispositifs d'entraînement en rotation (21,22) sont disposés à l'intérieur des douilles filetées (16,17) et sont accouplés, au niveau de leur extrémité tournée à l'opposé du frein à disque, au dispositif de synchronisation (26) qui forme un composant séparé,
[b] que l'actionnement des dispositifs d'entraînement en rotation (21,22) est réalisé au moyen d'un organe d'entraînement (24), qui est prévu sur au moins l'un des dispositifs d'entraînement en rotation,
[c] que l'étrier de frein (2) possède, sur son côté tourné à l'opposé du frein à disque, des ouvertures au moyen desquelles les dispositifs d'entraînement en rotation (21,22) peuvent être introduits dans les douilles filetées (16,17) et par l'intermédiaire desquels au moins un élément de levier (25) peut être accouplé à l'organe d'entraînement considéré (24), et
[d] que, lorsque les dispositifs d'entraînement en rotation (21,22) sont mis en place, le dispositif de synchronisation (26) est situé en avant de la face frontale de l'étrier de frein (2), tournée à l'opposé du frein à disque et peut être recouvert par un élément formant couvercle (31) pouvant être raccordé par brides en cet endroit.

2. Frein à disque suivant la revendication 1, caractérisé par le fait que sur l'extrémité, éloignée du frein à disque, des dispositifs d'entraînement en rotation (21,22), est disposé un pignon qui engrène avec le dispositif de synchronisation (26) réalisé sous la forme d'un organe d'accouplement.

3. Frein à disque suivant la revendication 2, caractérisé par le fait que les deux dispositifs d'entraînement en rotation (21,22), les deux pignons, l'organe de couplage (26) et le ou les organes d'entraînement (24) sont rassemblés pour former une unité de construction, qui comprend une partie formant couvercle (29,31), qui s'étend en direction de l'organe de couplage (26) et loge ce dernier ainsi que les pignons et à partir de laquelle font sailie, à angle droit, les dispositifs d'entraînement en rotation (21,22) qui portent extérieurement des dentures axiales, cette unité de construction devant être montée à partir du côté tourné à l'opposé du frein à disque, au moyen de l'insertion des dispositifs d'entraînement en rotation (21,22) dans les douilles filetées (16,17) et raccordement ultérieur, par bride de la partie formant couvercle (29,31), à l'étrier de frein (2).

4. Frein à disque suivant l'une des revendications 1 à 3, caractérisé par le fait que la partie formant couvercle est constituée de plusieurs couvercles individuels (29,31) pouvant être reliés entre eux.

5. Frein à disque suivant la revendication 4, caractérisé en ce que les deux dispositifs d'entraînement en rotation (21,22) sont montés sur un couvercle individuel (29) pouvant être raccordé par bride directement à l'étrier de frein (2) et qui supportent un palier rotatif (7) pour le dispositif d'actionnement (9,22), les deux pignons et l'organe d'accouplement (26) étant situés sur le côté, tourné à l'opposé du disque de frein, de ce couvercle individuel (22) et pouvant être recouvert au moyen d'un autre couvercle individuel (31), qui peut être raccordé par bride à ce couvercle.

6. Frein à disque suivant la revendication 5, caractérisé par le fait que le palier rotatif est un palier à demi-coques (7).

7. Frein à disque suivant l'une des revendications 2 à 6, caractérisé par le fait qu'il est prévu, comme organe de couplage, une courroie dentée (26).
